# EUROPEAN PATENT APPLICATION

(11) **EP 4 722 501 A1**
(43) Date of publication of application: **08.04.2026**
(21) Application number: 25205110.7
(22) Date of filing: 26.09.2025
(51) Int. Cl.: F01D 25/20, F02C 7/06, F01D 15/10

(54) **LUBRICATION CIRCUIT WITH BEARING COMPARTMENT ELECTRIC PUMP IN SCAVENGER LINE**

(30) Priority: 30.09.2024 US 202418901372
(71) Applicant: RTX Corporation, Farmington, CT 06032 (US)
(72) Inventor: GLAHN, Jorn A., Farmington, 06032 (US); ACKERMANN, William K., Farmington, 06032 (US)
(74) Representative: Dehns

(57) **Abstract**

An engine system comprises a gas turbine engine (20) that has a spool (30,32) that includes a compressor rotor and a turbine, and a combustor (56) connected to receive compressed air from the compressor rotor. There is an electric engine motor (64) electrically connected to a battery (60) and coupled to drive the spool (30,32). A lubrication circuit (66) includes a bearing compartment (68), a scavenger line (76a) connected with the bearing compartment (68), and a mechanically-driven scavenger pump (74) operable to suction the bearing compartment (68) via the scavenger line (76a). A bearing compartment pump (80) is located in the scavenger line (76a) between the bearing compartment (68) and the scavenger pump (74). The bearing compartment pump (80) is electrically connected to the battery (60) and is operable to reduce pressure in the bearing compartment (68) independently of operation of the mechanically-driven scavenger pump (74).

## Description

### BACKGROUND

An aircraft gas turbine engine typically includes a propulsor that delivers air into a core engine that has compressor and turbine sections. The air is compressed in the compressor and delivered into a combustor where it is mixed with fuel and ignited. The combustion products are expanded through at least one turbine rotor, driving rotation. The turbine rotor in turn drives a compressor rotor.

More recently, hybrid electric-gas turbine engines are under consideration. A hybrid engine incorporates an electric motor. The electric motor is used to supplement the drive from the turbine section. A hybrid gas-electric engine can incorporate an electric motor and an electric generator on each engine spool, both high rotor and low rotor. As an example, the electric motor may be used to supplement the drive to the compressor section during high power operation, such as take-off. During low power operation, such as descent or taxi, the electric motor may be the only driver.

### SUMMARY

According to one aspect of the present invention, an engine system includes a gas turbine engine having a spool that includes a compressor rotor and a turbine rotor connected to drive the compressor rotor, a combustor connected to receive compressed air from the compressor rotor, and a battery. An electric engine motor is electrically connected to the battery and connected to drive the spool. A lubrication circuit includes a bearing compartment, a scavenger line connected with the bearing compartment, and a mechanically-driven scavenger pump operable to suction the bearing compartment via the scavenger line. There is a bearing compartment pump in the scavenge line between the bearing compartment and the scavenger pump. The bearing compartment pump is electrically connected to the battery and operable to reduce pressure in the bearing compartment independently of operation of the mechanically-driven scavenger pump.

Optionally, and in accordance with the above, the bearing compartment pump is electrically connected to the battery through a motor controller, and the motor controller is configured to switch the bearing compartment pump ON and OFF.

Optionally, and in accordance with any of the above, the motor controller is configured to switch the bearing compartment pump from OFF to ON responsive to a speed of the turbine rotor falling below a low-speed threshold.

Optionally, and in accordance with any of the above, the speed threshold is an N2 high rotor speed of 70%.

Optionally, and in accordance with any of the above, the motor controller is configured to switch the bearing compartment pump from OFF to ON responsive to an aircraft altitude.

Optionally, and in accordance with any of the above, the aircraft altitude is zero.

Optionally, and in accordance with any of the above, the motor controller is configured to switch the bearing compartment pump from OFF to ON responsive to an aircraft ambient temperature.

Optionally, and in accordance with any of the above, the motor controller is configured to switch the bearing compartment pump from OFF to ON responsive to the pressure in the bearing compartment exceeding a high-pressure threshold.

Optionally, and in accordance with any of the above, the bearing compartment pump is operable in absence of operation of the mechanically-driven scavenger pump.

According to another aspect of the present invention, an engine system includes a gas turbine engine having a spool that includes a compressor rotor and a turbine rotor connected to drive the compressor rotor, and a combustor connected to receive compressed air from the compressor rotor. A lubrication circuit includes a bearing compartment, a scavenger line connected with the bearing compartment, and a mechanically-driven scavenger pump operable to suction the bearing compartment via the scavenger line. There is a bearing compartment pump in the scavenger line between the bearing compartment and the scavenger pump. The bearing compartment pump is operable to reduce pressure in the bearing compartment independently of operation of the mechanically-driven scavenger pump. A motor controller is in communication with the bearing compartment pump and configured to switch the bearing compartment pump ON and OFF.

Optionally, and in accordance with any of the above, further includes a battery electrically connected to the bearing compartment pump through the motor controller.

Optionally, and in accordance with any of the above, the motor controller is configured to switch the bearing compartment pump from OFF to ON responsive to a speed of the at least one turbine rotor falling below a low-speed threshold.

Optionally, and in accordance with any of the above, the motor controller is configured to switch the bearing compartment pump from OFF to ON responsive to an aircraft altitude.

Optionally, and in accordance with any of the above, the motor controller is configured to switch the bearing compartment pump from OFF to ON responsive to an aircraft ambient temperature.

Optionally, and in accordance with any of the above, the motor controller is configured to switch the bearing compartment pump from OFF to ON responsive to the pressure in the bearing compartment exceeding a high-pressure threshold.

According to another aspect of the present invention, an engine system includes a lubrication circuit that includes a bearing compartment, a scavenger line connected with the bearing compartment, and a mechanically-driven scavenger pump operable to suction the bearing compartment via the scavenger line. An electric power source is also included. There is a bearing compartment pump in the scavenge line between the bearing compartment and the scavenger pump. The bearing compartment pump is electrically connected with the electric power source and operable to reduce pressure in the bearing compartment independently of operation of the mechanically-driven scavenger pump.

Optionally, and in accordance with any of the above, further includes a motor controller in communication with the bearing compartment pump and configured to switch the bearing compartment pump ON and OFF.

Optionally, and in accordance with any of the above, further includes a spool including a compressor rotor and a turbine rotor connected to drive the compressor rotor. A combustor is connected to receive compressed air from the compressor rotor, and an electric engine motor is connected to drive the spool. The electric engine motor is electrically connected with the electric power source.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. In this disclosure, like reference numerals designate like elements where appropriate and reference numerals with the addition of one-hundred or multiples thereof designate modified elements that are understood to incorporate the same features and benefits of the corresponding elements. The drawings that accompany the detailed description can be briefly described as follows.
Figure 1 illustrates a hybrid gas-electric turbine engine.
Figure 2 illustrates a lubrication circuit of the engine.
Figure 3 illustrates a lubrication circuit of the engine.
Figure 4 illustrates another example lubrication circuit of the engine.

### DETAILED DESCRIPTION

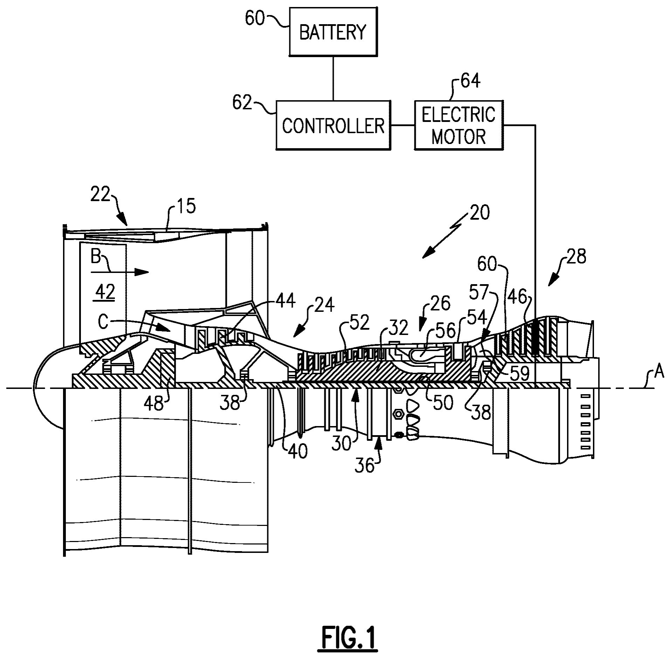

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including single-spool and three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. As an example, the fan 42 rotates at a slower speed than the low pressure compressor 44, and in the opposite direction, due to the connection through the geared architecture 48. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or at least 10 fan blades 43 but no more than 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches (102 centimeters), or more narrowly no more than 75 inches (191 centimeters). For example, the maximum radius of the fan blades 43 can be between 45 inches (114 centimeters) and 60 inches (152 centimeters), such as between 50 inches (127 centimeters ) and 55 inches (140 centimeters). Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produced at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 22.0, or more narrowly is between 10.0 and 14.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30 degrees Celsius (°C)). The TET may be greater than or equal to 2700.0 °F (1482.2 °C), or more narrowly less than or equal to 3500.0 °F (1926.7 °C), such as between 2750.0 °F (1510 °C) and 3350.0 °F (1843.3 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1200.0 °F (648.9 °C), or more narrowly greater than or equal to 800.0 °F (426.7 °C), such as between 900.0 °F (482.2 °C) and 975.0 °F (523.9 °C). The relatively low EGT can be utilized in combination with the other techniques disclosed herein to reduce fuel consumption.

The engine 20 is a gas-electric hybrid turbine engine system. In this regard, the engine 20 additionally includes an electric power source 60 that is electrically connected through a controller 62 to an electric engine motor 64. The controller 62 may be in communication with, or integrated with, a full authority digital electronic control ("FADEC") that is standard for gas turbine engines. In embodiments, the electric power source 60 is a battery. A battery is device that converts chemical energy contained in electroactive materials into electric energy by an electrochemical oxidation-reduction (redox) reaction. The electric power source 60 may include multiple individual cells that are arranged in a series-parallel configuration to achieve a desired voltage and capacity in a battery pack. For instance, a battery pack is composed of blocks of parallel cells and the blocks are in series to achieve the desired voltage. As will be appreciated, the configuration of the battery is not limited, and other configurations may be used. In another example, the electric power source 60 is a generator that produces electricity from spool rotational motion.

Although not shown, the controller 62 includes hardware, such as a processor, a memory, and a communication interface. The memory may include any one or combination of volatile memory elements (e.g., random access memory, such as DRAM, SRAM, SDRAM, VRAM, etc.) and/or nonvolatile memory elements (e.g., ROM, hard drive, tape, CD-ROM, etc.). The memory stores instructions which, when executed by the processor, cause the processor to implement the various features discussed herein.

The controller 62 is configured to control operation (e.g., ON and OFF) of the electric engine motor 64, which is mechanically coupled to at least the low speed spool 30, but may additionally or alternatively be mechanically coupled to the high speed spool 32. In one example, the controller 62 activates (ON) the electric engine motor 64 responsive to a flight condition, such as takeoff, to supplement the power provided by the turbine 46. As will be appreciated, however, the operation of the electric engine motor 64 is not necessarily limited to the takeoff condition. It is also to be appreciated that each engine spool 30/32 can have both an electric generator and an electric motor, and that in such an arrangement, power can be transferred between spools.

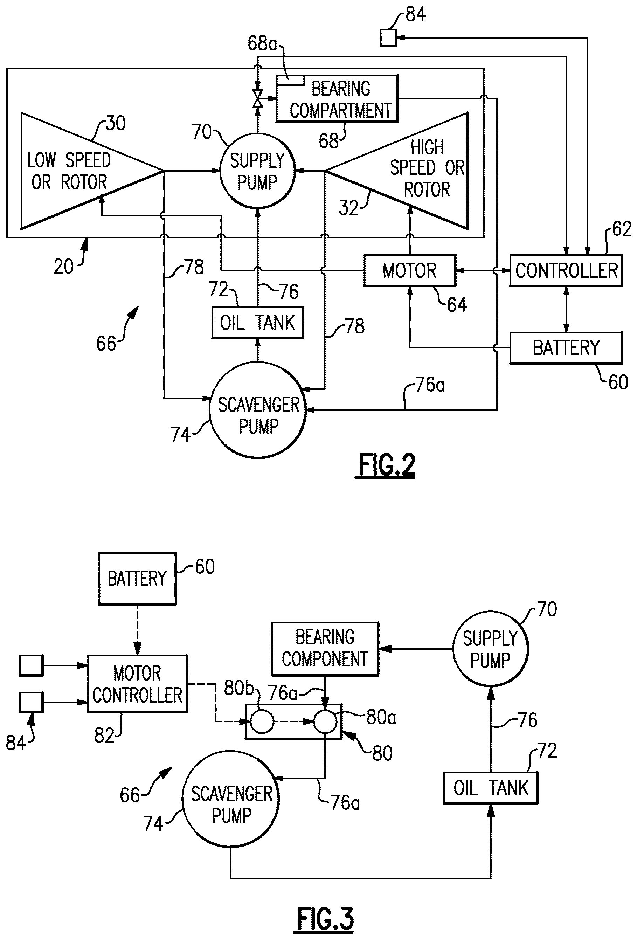

Figure 2 illustrates a diagram of the engine 20 and the general configuration of a lubrication circuit 66 of the engine 20, further details of which will be discussed in more detail later on below. The lubrication circuit 66 serves to circulate a lubricant (e.g., oil or an equivalent) through a bearing compartment 68. Turbine engines are known to have several bearings, which are typically referred to by numerals, such as Nos. 1, 1.5, 2, 3, 4, 5, and 6. Such a bearing is provided in a compartment that includes a seal 68a to reduce or prevent loss of the lubricant. The bearing compartment 68 may be any of the numbered bearings listed above or combinations thereof, but is not limited thereto. The lubrication "circuit" refers to the closed-flow path loop through a given bearing compartment and the componentry that supports operation of the lubrication circuit 66.

In the example shown, the lubrication circuit 66 at least includes a supply pump 70, a lubricant tank 72, and at least one scavenger pump 74. Oil lines 76 fluidly connect the bearing compartment 68, the pump 70, the lubricant tank 72, and the scavenger pump 74 in a closed-loop circuit. The oil line section leading from the bearing compartment 68 to the scavenger pump 74 is referred to herein as a scavenger line 76a. Although only one supply pump 70 and one scavenger pump 74 are illustrated, it is to be understood that further examples include multiple supply pumps 70 and/or multiple scavenger pumps 74.

The supply pump 70 operates to pump the lubricant from the lubricant tank 72 into the bearing compartment 68 so that the bearing therein is properly lubricated. The scavenger pump 74 is mechanically-driven off of the low speed spool 30 and/or the high speed spool 32, as shown by mechanical couplings 78, which may include one or more gearboxes. Operation of the scavenger pump 74 creates suction that draws lubricant from the bearing compartment 68. The lubricant that is drawn off may be passed though one or more additional components before circulating back into the lubricant tank 72, such as but not limited to, a deaerator, a lubricant health monitor, and/or a filter.

The exterior environment surrounding the bearing compartment 68 is pressurized to a higher pressure than the interior of the bearing compartment 68 in order to provide a pressure differential that reduces or prevents lubricant from escaping past the seal 68a. Thus, the sealing of the bearing compartment 68 is subject to the pressure differential between the interior and the exterior. As a result, control of this pressure differential is advantageous in controlling efficiency of the seal 68a. As an example, a desired pressure differential is a differential value in which lubricant does not pass through the seal 68a from the interior of the bearing compartment 68 to the exterior of the bearing compartment 68. In a further example, the differential is a value in which air is also not forced through the seal 68a from the exterior into the interior of the bearing compartment 68.

Although operation of the scavenger pump 74 reduces pressure within the bearing compartment 68, the positive pressure differential control scheme is often directed to the exterior pressurization around the bearing compartment 68, e.g., with air from the compressor 24. However, idle and sub-idle engine operation challenge such a control scheme, which can lead to lubricant loss from the bearing compartment 68.

Figure 3 illustrates a further diagram of the lubrication circuit 66, which includes a bearing compartment pump 80 in the scavenge line 76a between the bearing compartment 68 and the scavenger pump 74. The bearing compartment pump 80 includes a pump portion 80a and a motor portion 80b that drives the pump portion 80a. For example, the pump portion 80a is a centrifugal pump, but is not limited thereto. The bearing compartment pump 80 is electrically connected through a motor controller 82 to the electric power source 60 and is operable to reduce pressure in the bearing compartment 68 together with the scavenger pump 74. The operation of the bearing compartment pump 80 does not, however, rely on operation of the scavenger pump 74 and is thus not tied to any condition of the scavenge pump 74.

The motor controller 82 is configured to switch the bearing compartment pump 80 ON and OFF. One or more input parameters 84 are provided as feedback for determining when to switch the bearing compartment pump between ON and OFF. The parameters may be associated with a lookup table that permits the motor controller 82 to receive the inputs 84 and then determine what state, ON or OFF, the pump 80 should be in. In one example, the motor controller 82 is configured to switch the bearing compartment pump 80 from OFF to ON responsive to a speed of the turbine rotor 46 falling below a low-speed threshold. For instance, the speed threshold is an N2 high rotor speed of 70%. Thus, if the speed falls below 70%, the motor controller 82 switches the bearing compartment pump 80 ON. If the bearing compartment pump 80 is already ON, then the motor controller 82 does not need to switch and maintains the pump 80 in the ON state.

In another example, the motor controller 82 is configured to switch the bearing compartment pump 80 from OFF to ON responsive to an aircraft altitude. For instance, if the aircraft altitude is zero, the aircraft is grounded and may require operation of the bearing compartment pump 80 to maintain or achieve a desired pressure differential.

In another example, the motor controller 82 is configured to switch the bearing compartment pump 80 from OFF to ON responsive to an aircraft ambient temperature. For instance, the bearing compartment pump 80 may be switched to ON responsive to the temperature exceeding a high-temperature threshold.

In another example, the motor controller 82 is configured to switch the bearing compartment pump 80 from OFF to ON responsive the pressure in the bearing compartment 68 exceeding a high-pressure threshold, or alternatively the pressure differential falling below a low differential pressure threshold. For instance, in situations where the exterior pressurization is unable to maintain a desired pressure differential, the bearing compartment pump 80 is switched ON in order to maintain or achieve a more desirable pressure differential. In a further example, the seal 68a may wear over time and become unable to maintain efficient sealing. In this case, the bearing compartment pump 80 is utilized to assist in maintaining or achieving a desired differential. In a further example, the switching of the bearing compartment pump 80 between OFF and ON is also controlled responsive to engine power (power level angle, PLA), such as ON at low power (low PLA) and OFF at high power (high PLA and high buffer pressure). The power levels at which switching is performed will be dependent upon the specific engine application.

It is also to be appreciated that the bearing compartment pump 80 is operable in absence of operation of the mechanically-driven scavenger pump 74. That is, the operation of the bearing compartment pump 80 is not dependent upon the presence of mechanical power to the scavenger pump 74. Thus, when there is little or no mechanical power available, such as at sub-idle or idle engine conditions, the bearing compartment pump 80 is operable off of the electric power source 60 to maintain or achieve a desired pressure differential.

Incorporation of the bearing compartment pump 80 of the lubrication circuit 66 into the hybrid gas-electric turbine engine 20 is advantageous because of the intrinsic availability of electric power in a hybrid-electric engine. It is to be understood that various embodiments of the present disclosure are applicable to a hybrid gas-electric engine comprising a geared turbofan engine or a gas turbine engine (e.g., non-geared turbofan engine) or any equivalent engine.

Additionally, in further examples, at least the bearing compartment pump 80 of the lubrication circuit 66 is retrofit into an existing gas turbine engine that is not a gas-electric hybrid engine. In that case, since the existing engine would not have an intrinsic electric power source, the engine is provided with the electric power source 60 as part of the retrofit or, if present, an existing electric power source of the aircraft is tapped to power the bearing compartment pump 80. Such power sources are not limited to batteries and may include a generator.

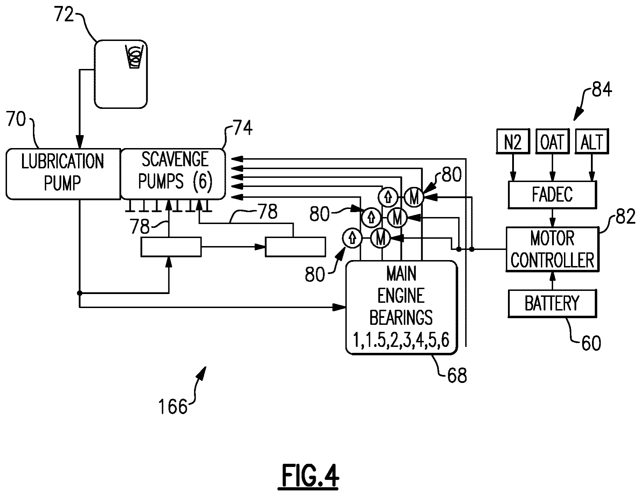

Figure 4 illustrates a further example of a lubrication circuit 166. The lubrication circuit 166 is the same as the lubrication circuit 66 except that the circuit 166 includes multiple scavenger pumps 70 and multiple bearing compartment pumps 80, which may be connected with multiple bearing compartments 68.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. An engine system comprising:
a gas turbine engine (20) having a spool (30,32) including a compressor rotor and a turbine rotor connected to drive the compressor rotor, and a combustor (56) connected to receive compressed air from the compressor rotor;
a battery (60);
an electric engine motor (64) electrically connected to the battery (60) and connected to drive the spool (30,32);
a lubrication circuit (66) including a bearing compartment (68), a scavenger line (76a) connected with the bearing compartment (68), and a mechanically-driven scavenger pump (74) operable to suction the bearing compartment (68) via the scavenger line (76a); and
a bearing compartment pump (80) in the scavenger line (76a) between the bearing compartment (68) and the scavenger pump (74), the bearing compartment pump (80) electrically connected to the battery (60) and operable to reduce pressure in the bearing compartment (68) independently of operation of the mechanically-driven scavenger pump (74).

2. The engine system as recited in claim 1, wherein the bearing compartment pump (80) is electrically connected to the battery (60) through a motor controller (82), the motor controller (62) configured to switch the bearing compartment pump (80) ON and OFF.

3. The engine system as recited in claim 2, wherein the motor controller (82) is configured to switch the bearing compartment pump (80) from OFF to ON responsive to a speed of the turbine rotor falling below a low-speed threshold,
optionally, wherein the speed threshold is an N2 high rotor speed of 70%.

4. The engine system as recited in claim 2 or 3, wherein the motor controller (82) is configured to switch the bearing compartment pump (80) from OFF to ON responsive to an aircraft altitude,
optionally, wherein the aircraft altitude is zero.

5. The engine system as recited in claim 2, 3 or 4, wherein the motor controller (62) is configured to switch the bearing compartment pump (80) from OFF to ON responsive to an aircraft ambient temperature.

6. The engine system as recited in claims 2 to 5, wherein the motor controller (62) is configured to switch the bearing compartment pump (80) from OFF to ON responsive to the pressure in the bearing compartment (68) exceeding a high-pressure threshold.

7. The engine system as recited in any preceding claim, wherein the bearing compartment pump (80) is operable in absence of operation of the mechanically-driven scavenger pump (74).

8. An engine system comprising:
a gas turbine engine (20) having a spool (30,32) including a compressor rotor and a turbine rotor connected to drive the compressor rotor, and a combustor (56) connected to receive compressed air from the compressor rotor;
a lubrication circuit (66) including a bearing compartment (68), a scavenger line (76a) connected with the bearing compartment (68), and a mechanically-driven scavenger pump (74) operable to suction the bearing compartment (68) via the scavenger line (76a);
a bearing compartment pump (80) in the scavenger line (76a) between the bearing compartment (68) and the scavenger pump (74), the bearing compartment pump (80) operable to reduce pressure in the bearing compartment (68) independently of operation of the mechanically-driven scavenger pump (74); and
a motor controller (82) in communication with the bearing compartment pump (80) and configured to switch the bearing compartment pump (80) ON and OFF.

9. The engine system as recited in claim 8, further comprising a battery (60) electrically connected to the bearing compartment pump (80) through the motor controller (82).

10. The engine system as recited in claim 8 or 9, wherein the motor controller (82) is configured to switch the bearing compartment pump (80) from OFF to ON responsive to a speed of the at least one turbine rotor falling below a low-speed threshold.

11. The engine system as recited in claims 8 to 10, wherein the motor controller (82) is configured to switch the bearing compartment pump (80) from OFF to ON responsive to an aircraft altitude.

12. The engine system as recited in claims 8 to 11, wherein the motor controller (82) is configured to switch the bearing compartment pump (80) from OFF to ON responsive to an aircraft ambient temperature.

13. The engine system as recited in claims 8 to 12, wherein the motor controller (82) is configured to switch the bearing compartment pump (80) from OFF to ON responsive to the pressure in the bearing compartment (68) exceeding a high-pressure threshold.

14. An engine system comprising:
a lubrication circuit (66) including a bearing compartment (68), a scavenger line (76a) connected with the bearing compartment (68), and a mechanically-driven scavenger pump (74) operable to suction the bearing compartment (68) via the scavenger line (76a);
an electric power source (60);
a bearing compartment pump (80) in the scavenger line (76a) between the bearing compartment (68) and the scavenger pump (74), the bearing compartment pump (80) electrically connected with the electric power source (60) and operable to reduce pressure in the bearing compartment (68) independently of operation of the mechanically-driven scavenger pump (74).

15. The engine system as recited in claim 14, further comprising a motor controller (82) in communication with the bearing compartment pump (80) and configured to switch the bearing compartment pump (80) ON and OFF,
optionally, further comprising a spool (30,32) including a compressor rotor and a turbine rotor connected to drive the compressor rotor, a combustor (56) connected to receive compressed air from the compressor rotor, and an electric engine motor (64) connected to drive the spool (30,32), the electric engine motor (64) electrically connected with the electric power source (60).
